# NEUE EUROPÄISCHE PATENTSCHRIFT

(11) **EP 0 533 755 B2**
(45) Veröffentlichungstag und Bekanntmachung des Hinweises auf die Entscheidung über den Einspruch: **02.08.2000**
(45) Hinweis auf die Patenterteilung: 12.02.1997
(21) Anmeldenummer: 91910944.7
(22) Anmeldetag: 11.06.1991
(51) Int. Cl.: H04J 3/18, H04M 11/06, H04M 19/08

(54) **NACHRICHTENÜBERTRAGUNGSSYSTEM**
COMMUNICATIONS-TRANSMISSION SYSTEM
SYSTEME DE TRANSMISSION D'INFORMATIONS

(30) Priorität: 13.06.1990 AT 128690
(43) Veröffentlichungstag der Anmeldung: 31.03.1993
(73) Patentinhaber: SEMCOTEC HANDELSGESELLSCHAFT M.B.H., A-1030 Wien (AT)
(72) Erfinder: KAUSEL, Wilfried, A-1180 Wien (AT); KREMSER, Hannes, A-1120 Wien (AT); STALLBAUMER, Hermann, A-1100 Wien (AT)
(74) Vertreter: Babeluk, Michael, Dipl.-Ing. Mag.
(86) Internationale Anmeldenummer: AT9100069
(87) Internationale Veröffentlichungsnummer: WO9120141

(56) Entgegenhaltungen:
- EP-A- 0 239 908
- PATENT ABSTRACTS OF JAPAN, Band 10, Nr. 251 (E-432)[2307], 28. August 1986, & JP-A-61 80923
- PATENT ABSTRACTS OF JAPAN, Band 5, Nr. 7 (E-41)[679], 17. Januar 1981, & JP-A- 55 137 761
- Specification der Telecom Australia vom März 1988, seite 3

## Beschreibung

Die Erfindung bezieht sich auf ein Nachrichtenübertragungssystem, insbesondere Telefonsystem, bei dem Teilnehmer über eine Leitung mit einem Wählamt verbindbar sind.

Bei den bekannten Gesellschaftsanschlüssen ist es lediglich möglich nacheinander Gespräche von den angeschlossenen Fernsprechapparaten aus zu führen oder zu empfangen.

In der EP-A2-239 908 ist ein Breitbandübertragungs-Schaltnetzwerk beschrieben, in welchem eine Breitbandquelle und eine Zielanschlußstelle über Modemschaltungen verbunden sind, die die zu übertragenden analogen Breitbandsignale als digitale Signale für die Übertragung kodieren und die übertragenen digitalen Signale in analoge Signale umwandeln. Zwischen den für die Umwandlung verwendeten Analog/Digitalwandlern und den eigentlichen Modemschaltkreisen können dabei Datenkompressorschaltungen und Multiplexer angeordnet sein.

Ziel der Erfindung ist es, ein Nachrichtenübertragungssystem vorzuschlagen, das es ermöglicht mehrere Gespräche gleichzeitig über die Leitung zu übertragen.

Erfindungsgemäß wird dies durch die Merkmale von Patentanspruch 1 erreicht.

Durch diese Maßnahmen ist es möglich über eine bestehende Leitung zwischen Teilnehmern und Amt abhängig von der Leitungsqualität bzw. der Gesamtverbindung eine bestimmte Anzahl von Gesprächen gleichzeitig zu übertragen oder andere Datenübertragungen durchzuführen.

So können z.B. bei einer Leitung von 5 bis 8 km Länge und einem Aderndurchmesser von 0,6 mm z.B. bis zu vier Sprechsignale ohne Qualitätsverminderung gleichzeitig übertragen werden. Dabei kann jeder Sprachkanal durch drei parallele Telefax- oder äquivalente Datenkanäle mit 9600 Baud ersetzt werden. Dadurch können z.B. neben zwei Gesprächen und sechs Faxübertragungen oder drei Gespräche und drei Faxübertragungen gleichzeitig über eine Teilnehmerleitung übertragen werden.

Durch die erfindungsgemäßen Maßnahmen kann sichergestellt werden, daß übliche Leitungslängen und Adernquerschnitte ausreichen, um eine Bitfehlerrate von besser als 10⁻⁶ erreichen zu können. Die ohne Signalregeneration überbrückbaren Entfernungen reichen von 2 bis 10km, abhängig von der Leitungsqualität wie z.B. Adernquerschnitt, dem Leitungszustand und dem Vorhandensein von Abzweigungen oder Stückelungen auch unterschiedlichen Querschnitts. Dabei ist eine Phantomspeisung der Teilnehmerschaltung durch das Wählamt durch das gleichspannungsfreie Datenformat auf der Leitung möglich und erlaubt dann auch bei allgemeinem Stromausfall den Betrieb.

Die an die Leitung angeschlossenen bidirektionalen Modemschaltungen können die Daten gemäß der CCITT-Norm modulieren und demodulieren.

Mit der erfindungsgemäßen Lösung ist es bei den üblichen Leitungslängen und Aderndurchmessern in aller Regel möglich gleichzeitig vier Gespräche zu übertragen.

Nach einem weiteren Merkmal der Erfindung kann vorgesehen sein, daß teilnehmerseitig an dem Multiplexer neben Fernsprechapparaten als Teilnehmer noch weitere Teilnehmer nämlich Geräte wie Computer, Telekopierer oder Fernschreiber, gegebenenfalls über Modems bzw. weitere Multiplexer angeschlossen sind und wählamtseitig Ausgänge des Multiplexers gegebenenfalls unter Zwischenschaltung von weiteren Multiplexern über Ansteuerschaltungen mit der Vermittlungseinrichtung verbunden sind.

Durch diese Maßnahmen ist es möglich neben den Fernsprechapparaten auch noch Datenübertragungen zwischen Computern, Telekopierern oder Fernschreibern gleichzeitig mit Gesprächen zu übertragen.

Das zur Übertragung vorgesehene digitale Datenformat läßt auch eine Unterteilung der Kanäle zu. So ist die prinzipielle Möglichkeit, bei geeignetem Ausbau des Systems zum Beispiel ein Sprachkanal durch drei Telex-, Telekopierer- oder Modemkanäle mit je 9600 Baud ersetzen zu können.

Bei der erfindungsgemäßen Einrichtung ist es ohne weiters möglich gebräuchliche Telefonapparate ohne irgendwelche Veränderungen anzuschließen und auch in den bestehenden Vermittlungseinrichtungen der Wählämter sind keine Eingriffe erforderlich.

Weiters kann vorgesehen sein, daß bei analogen Vermittlungseinrichtungen die den Fernsprechapparaten zugeordneten Ansteuerschaltungen durch bidirektionale Analog-Digitalwandler und die den Geräten zugeordneten Ansteuerschaltungen durch Modems gebildet sind.

Durch diese Maßnahmen ist eine Anpassung der erfindungsgemäßen Einrichtung an ein bestehendes analog aufgebautes Telefonsystem möglich.

Weiters kann vorgesehen sein, daß bei digitalen Vermittlungseinrichtungen die Ansteuerschaltungen durch A/D-wandlerlose Line-Cards gebildet sind, wodurch ein Anschluß herkömmlicher Telekopierer, Computer oder Fernschreiber an die erfindungsgemäße Einrichtung in einem digitalen Telefonsystem auf einfache Weise möglich ist. Grundsätzlich ist es aber auch möglich übliche Line-Cards zu verwenden, wenngleich die bei diesen vorhandenen Analog-Digital-Wandlern nicht erforderlich sind.

Nach einem weiteren Merkmal der Erfindung kann vorgesehen sein, daß parallel zu der amtsseitigen und der teilnehmerseitigen Modemschaltung je ein Übertrager parallel geschaltet sind, bei denen symmetrisch ausgebildete Sekundärwicklungen eines jeden Übertragers über je einen Kondensator miteinander verbunden sind, wobei an den Elektroden des an den amtsseitigen Übertragers angeschlossenen Kondensatorsn eine Gleichspannungsquelle und an den Kondensator des teilnehmerseitgen Übertragers ein DC/DC-Wandler angeschlossen ist und die beiden Enden der Sekundärwicklungen der beiden Übertrager über Übertragungsleitungen miteinander verbunden sind.

Durch diese Maßnahmen ist es möglich die teilnehmerseitige einrichtung vom Amt her mit Spannung zu versorgen, ohne beim Teilnehmer eine Batterie anordnen zu müssen, die erhebliche Probleme im Hinblick auf die Wartung mit sich bringen würde.

Die Erfindung wird nun anhand der Zeichnung näher erläutert. Dabei zeigen:
Fig. 1 die Teilnehmerseite eines Nachrichtenübertragungssystems,
Fig. 2 die zugehörige Wählamtsseite mit einem Wählamt mit analogen Anschlüssen,
Fig. 3 die zugehörige Wählamtsseite mit einem Wählamt mit digitalen Anschlüssen,
Fig. 4 die Teilnehmerseite eines erfindungsgemäßen Nachrichtenübertragsungssystems,
Fig. 5 die zu diesem weiteren System zugehörige Wählamtsseite mit einem Wählamt mit analogen Anschlüssen,
Fig. 6 jene mit einem Wählamt mit digitalen Anschlüssen.
Fig. 7 bis 12 verschieden Möglichkeiten der Ausbildung der Teilnehmeranordnung, und
Fig. 13 ein SChaltung zur Spannungsversorgung der Teilnehmer.

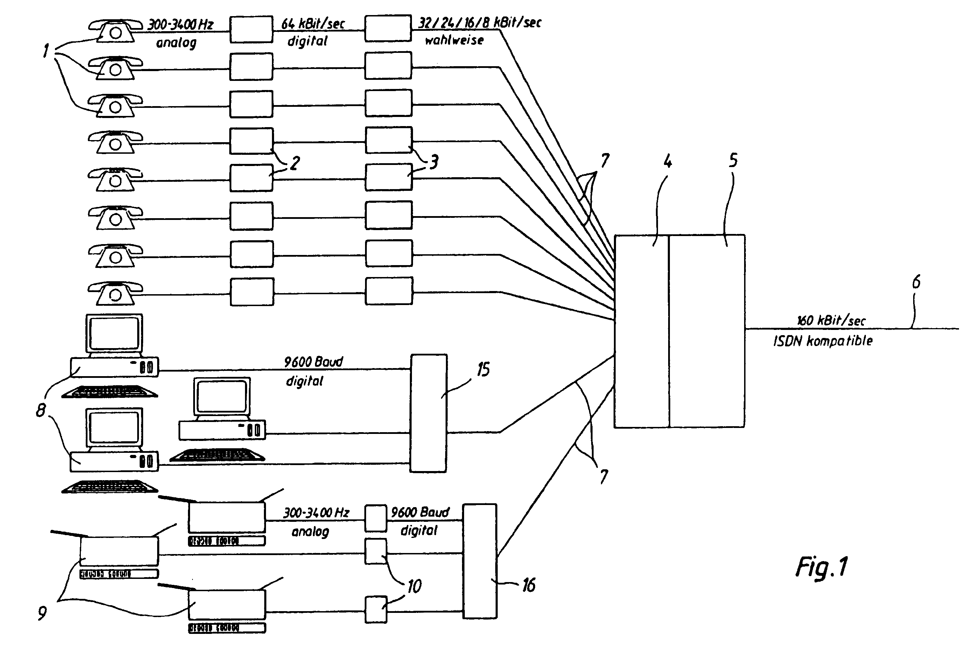

Gemäß Fig. 1 sind Teilnehmerapparate 1 mit bidirektionalen Analog-Digital-Wandlern 2 verbunden, die einerseits die von den Teilnehmerapparaten 1 kommenden analogen Signale, wobei diese Signale in der Regel einen Frequenzbereich von 300Hz bis 3400Hz aufweisen, in digitale Signale umwandeln und andererseits die von mit den Wandlern 2 verbundenen bidirektionalen Kompressor/Dekompressorschaltungen 3 kommenden digitalen Signale in analoge Signale umwandeln, die den Teilnehmerapparaten 1 zugeleitet werden.

Dabei liefern die Wandlerschaltungen 2 digitale Signale, die mit einer Übertragungsrate von z.B. 64kBit/sec zu der entsprechenden Kompressor/Dekompressorschaltung 3 übertragen werden.

Diese Kompressor/Dekompressorschaltungen 3 arbeiten insoferne bidirektional als sie die von den A/D Wandlern 2 kommenden Signale komprimieren und die vom Multiplexer 4 kommenden komprimierten digitalen Signale dekomprimieren und dann ihrerseits den Wandlern 2 zuleiten.

Dabei komprimieren die bidirektionalen Kompressor/Dekompressorschaltungen 3 die von den Wandlern 2 ankommenden Signale mit einer Rate von 64kBit/sec auf 32kBit/sec, 24 oder 16kBit/sec je nach Kompressionsalgorithmus oder Qualitätsansprüchen. Die Dekompression erfolgt entsprechend umgekehrt.

Der Multiplexer/Demultiplexer 4 arbeitet ebenfalls bidirektional, indem er einerseits die von den Teilnehmern kommenden Signale im Multiplexerbetrieb zu einem Signal verarbeitet und andererseits im Demultiplexerbetrieb die von der Leitung 6, bzw. die von der mit dieser verbundenen Modemschaltung 5 kommenden Signale auf die einzelnen Anschlußleitungen 7 aufteilt. Über die Leitung 6 werden neben den Gesprächs- und Übertragungsdaten auch noch vermittlungstechnische Informationen wie z.B. Wählimpulse, Gebührenimpulse bzw. Durchwahlimpulse zusätzlich übertragen.

An dem bidirektionalen Multiplexer/Demultiplexer 4 sind neben den Teilnehmerapparaten 1 auch noch drei Computer 8 über einen bidirektional arbeitenden Multiplexer/Demultiplexer 15 angeschlossen ebenso wie drei Telekopierer 9. An den Ausgang jedes Telekopierers 9 ist ein Neutralisationsmodem 10 angeschlossen, das die Wirkung des in den Telekopierern 9 eingebauten Ausgangsmodems wieder aufhebt. Über einen bidirektional arbeitenden Multiplexer/Demultiplexer 16 sind diese drei Telekopierer an den Hauptmultiplexer/Demultiplexer 4 angeschlossen.

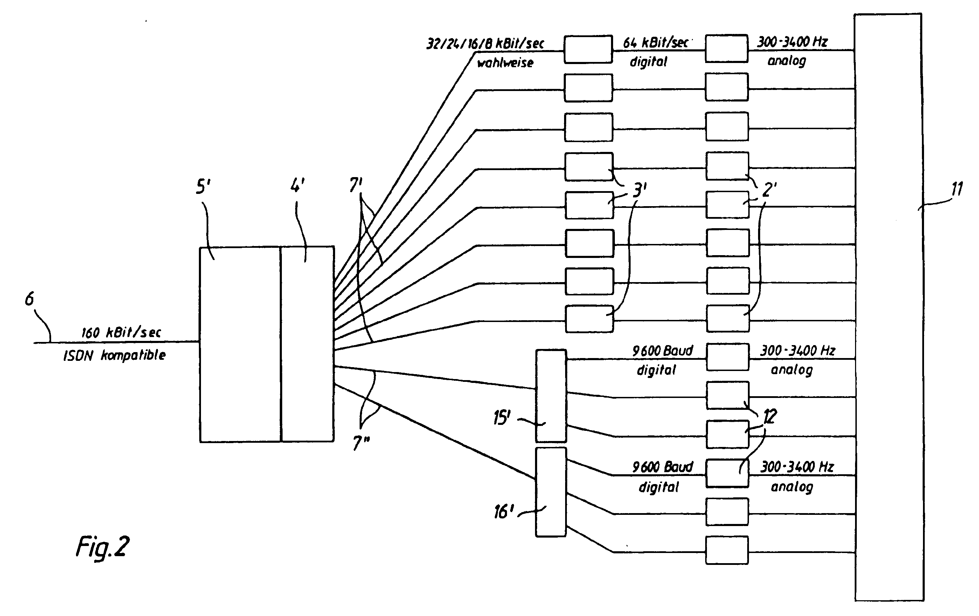

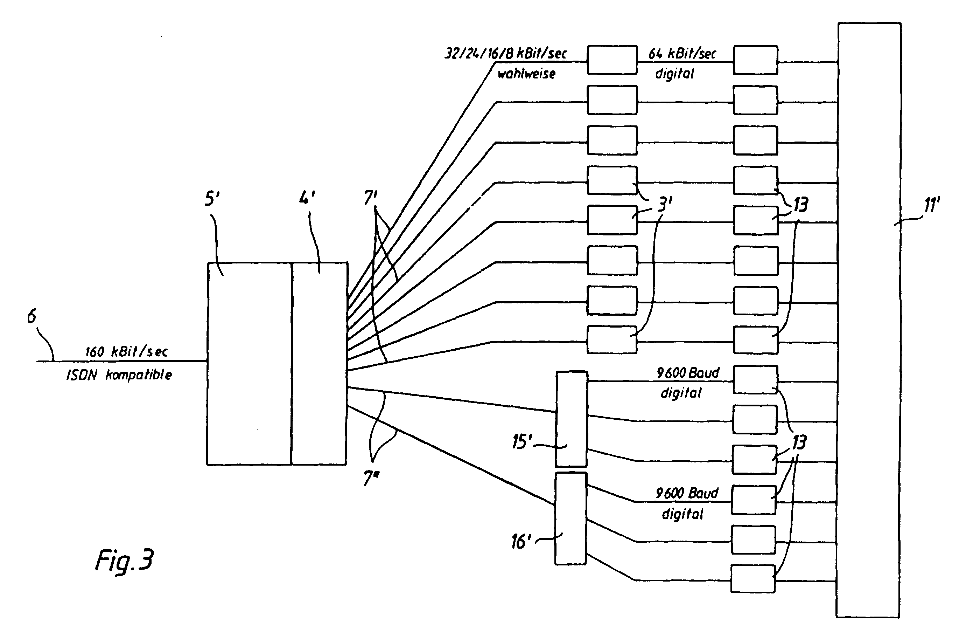

Wählamtsseitig ist, wie aus den Fig. 2 und 3 zu ersehen ist, an der Leitung 6 eine Modemschaltung 5' angeschlossen, wobei die Modemschaltungen 5, 5' die für die Übertragung der komprimierten und aufbereiteten Signale erforderliche Modulation bzw. Demodulation bewirken. Arbeitet das System nach der CCITT-Norm, dann kann das Datenformat auf der Leitung 6 den von dieser Norm für den ISDN-UₒBus angegebenen Standard entsprechen.

Die Modemschaltung 5' ist mit einem bidirektionalen Multiplexer/Demultiplexer 4' verbunden, der mit einem Teil seiner Ausgangsleitungen 7' mit bidirektionalen Kompressor/Dekompressorschaltungen 3' verbunden ist.

Im Falle einer Vermittlungseinrichtung 11 mit analoger Signalansteuerung sind die Kompressor/Dekompressorschaltungen 3' mit bidirektionalen Digital-Analog-Wandlern 2' verbunden, die ihrerseits mit der Vermittlungseinrichtung 11 verbunden sind, und diese mit analogen Signalen ansteuern.

Weitere Ausgangsleitungen 7'' sind gemäß Fig. 2 u.a. über einen weiteren den Datenleitungen der Computer 8 zugeordneten, bidirektional arbeitenden Multiplexer/Demultiplexer 15' sowie über einen weiteren den Datenleitungen der Telekopierer 9 zugeordneten, bidirektional arbeitenden Multiplexer/Demultiplexer 16' mit Modems 12 verbunden, die der Vermittlungseinrichtung 11 mit analoger Signalansteuerung vorgeschaltet sind und die von der Leitung 6 kommenden digitalen Signale in analoge Signale umwandeln.

Bei einer Vermittlungseinrichtung 11' mit digitaler Signalansteuerung, wie sie in der Fig. 3 dargestellt ist, sind die Kompressor/Dekompressorschaltungen 3' mit Teilnehmerschaltungen 13 verbunden, an deren Ausgängen digitale Signale auftreten. Bei diesen Teilnehmerschaltungen kann es sich um die bei digitalen Wählämtern üblichen, in Form von Karteneinschüben vorliegenden Teilnehmerschaltungen handeln, die insoferne modifiziert sind, als sie keinen A/D Wandler aufweisen. Die den Computern 8 zugeordnete Ausgangsleitung 7'' des bidirektional arbeitenden Hauptmultiplexers/Demultiplexers 4' ist an einen bidirektional arbeitenden Multiplexer/Demultiplexer 15 und eine den Telekopierern 9 zugeordnete Ausgangsleitung 7'' an einen bidirektional arbeitenden Multiplexer/Demultiplexer 16' angeschlossen. Die Ausgänge dieser Multiplexer/Demultiplexer 15', 16' sind direkt an die Teilnehmerschaltungen 13 angeschlossen, welch letztere eine Anpassung der ankommenden digitalen Signale an die Erfordernisse der Vermittlungseinrichtung 11' ermöglichen.

Die Hauptmultiplexer/Demultiplexer 4, 4' können alternativ auch so konzipiert sein, daß die den Geräten 8 bzw. 9 zugeordneten Multiplexer/Demultiplexer 15, 15' bzw. 16, 16' entfallen können und die Hauptmultiplexer/Demultiplexer 4, 4' deren Funktion übernehmen.

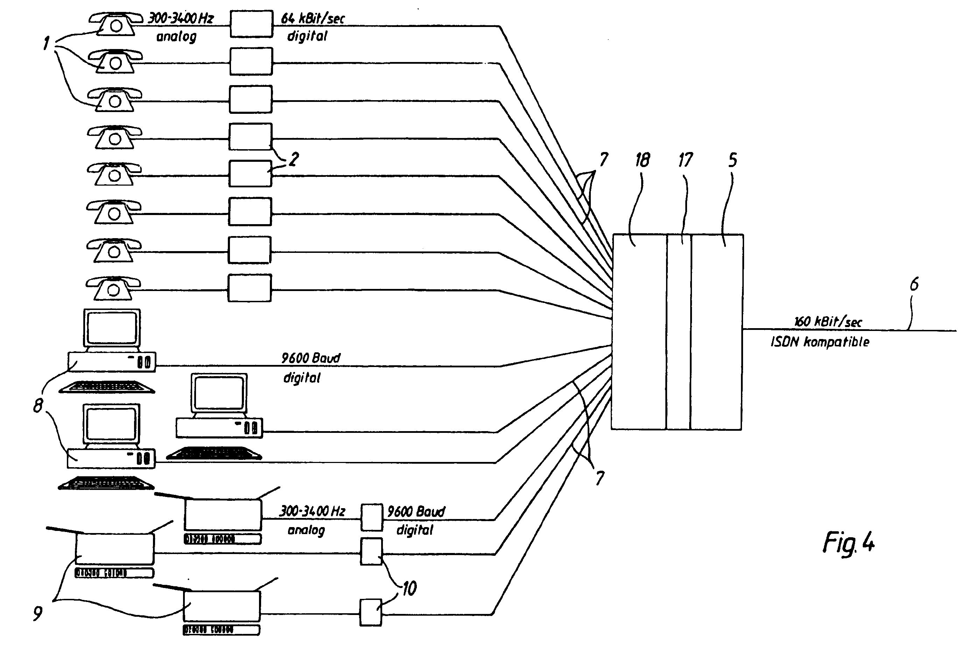

Die in den Fig. 4 bis 6 gezeigte Variante unterscheidet sich von jener nach den Fig. 1 bis 3 dadurch, daß die bidirektionale Kompression/Dekompression zentral erfolgt. Hiezu werden die Ausgänge der bidirektionalen Analog/Digital-Wandler 2 direkt an den Multiplexer/Demultiplexer 4 angeschlossen, ebenso wie die digitalen Datenausgänge der Computer 8 und die Ausgänge der den Telekopiergeräten 9 zugeordneten Modems 10.

An den Multiplexer/Demultiplexer 4 ist eine bidirektionale Kompressor/Dekompressorschaltung 17 angeschlossen, an deren Ausgang der Eingang der Modemschaltung liegt; die Leitung 6 ist wieder mit dem Ausgang der Modemschaltung verbunden.

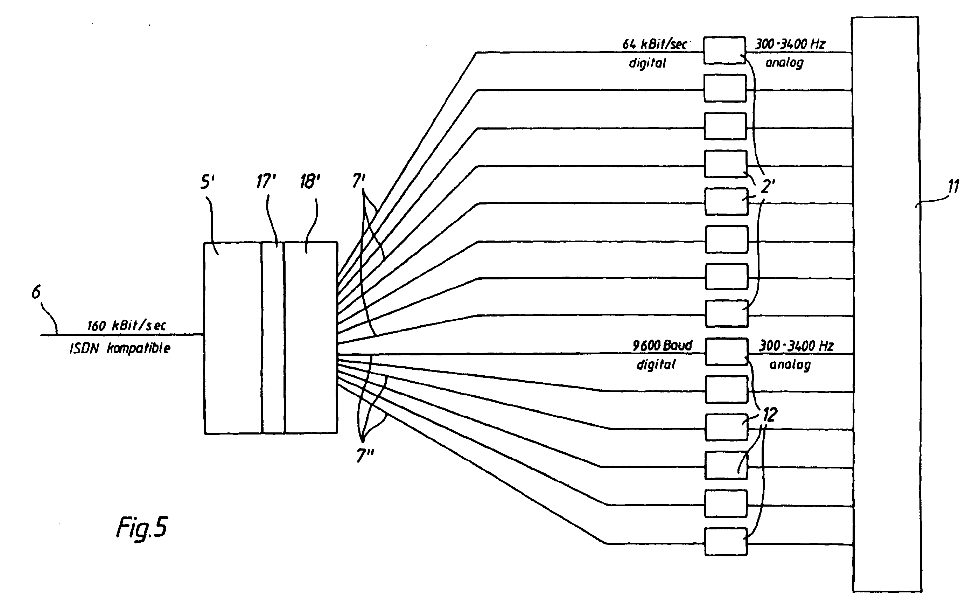

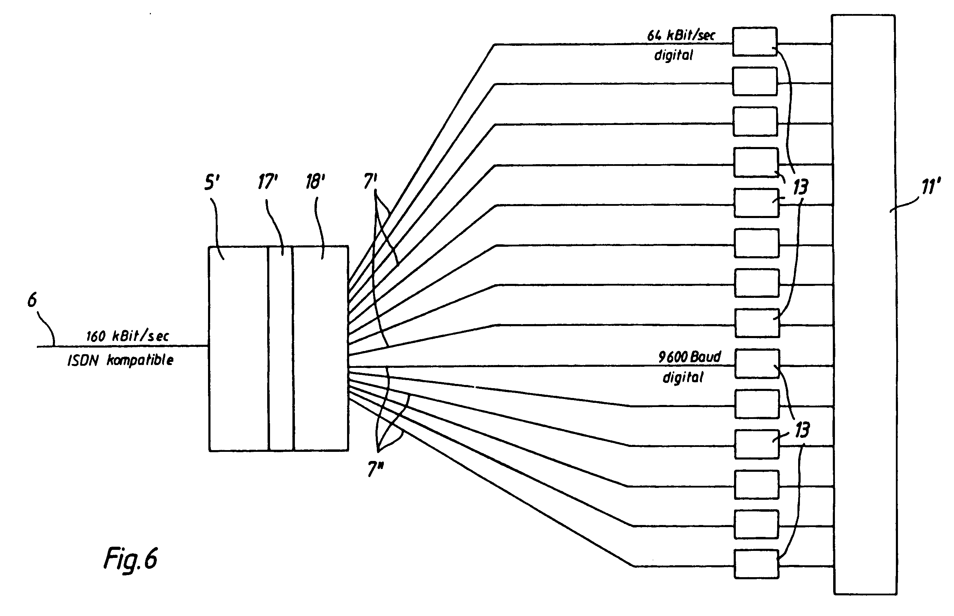

Den wählamtsseitigen Teil dieser Erfindungsvariante zeigt Fig. 5 für den Fall eines Wählamtes mit analoger Signalansteuerung und Fig. 6 für den eines Wählamtes mit digitaler Signalansteuerung. In beiden Fällen, Fig. 5 und 6, ist das wählamtsseitige Ende der Leitung 6 an die Modemschaltung 5' diese an eine bidirektionale Kompressor/Dekompressorschaltung 17' und diese an einen bidirektionalen Multiplexer/Demultiplexer 18' angeschlossen.

Die den Gesprächsteilnehmern entsprechenden Ausgänge des Multiplexers/Demultiplexers 18' sind gemäß Fig. 5 über die Datenleitungen 7' direkt an die bidirektionalen Analog-Digitalwandler 2' und die den Geräten 8, 9 entsprechenden Ausgänge des Multiplexers/Demultiplexers 18' über die Leitungen 7'' direkt an die Modems 12 angeschlossen.

Gemäß Fig. 6 sind die Datenleitungen 7' und 7'' vom Multiplexer 18' direkt an die Teilnehmerschaltungen 13 mit digitalem Signalausgang geführt.

Ansonsten entsprechen einander die beiden Alternativen des erfindungsgemäßen Systems, was durch gleiche Bezugszeichen zum Ausdruck gebracht ist.

Zur genauen Definition der Arbeitsweise "bidirektional" ist nachstehend noch folgendes zusammenfassendes Schema des Betriebsverhaltens der einzelnen, durch ihre Bezugsziffern ausgewiesenen, Schaltungen angegeben.

| | Schaltungen arbeiten als | | | | | |
|---|---|---|---|---|---|---|
| Datenübertragung von | A/D Wandler | Kompressor | Dekompressor | Multiplexer | Demultiplexer | D/A Wandler |
| Teilnehmer zu Wählamt | 2 | 3,17 | 3',17' | 4,15, 16,18 | 4',15' 16',18' | 2',12 |
| Wählamt zu Teilnehmer | 2',12 | 3',17' | 3,17 | 4',15', 16',18' | 4,15, 16,18 | 2 |

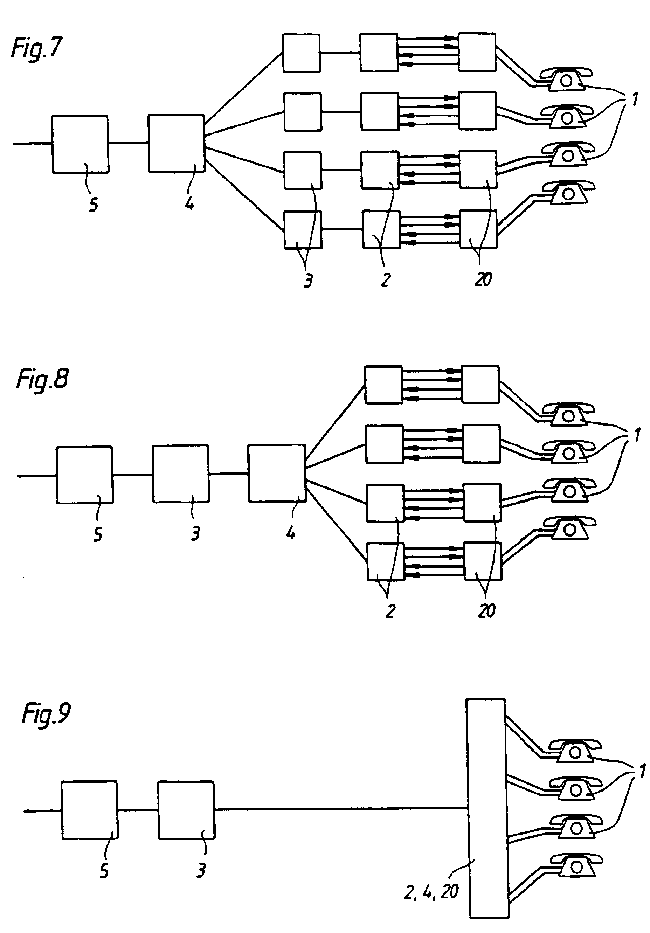

Die Fig. 7 bis 11 zeigt verschiedene Anordnungen der verschiedenen Bauteile bei den Teilnehmern.

Bei der Anordnung nach der Fig. 7 ist die Modemschaltung 5 mit einem Multiplexer/Demultiplexer 4 verbunden, an dem mehrere Kompressor/Dekompressorschaltungen 3 angeschlossen sind, die ihrerseits mit je einem Analog/Digitalwandler 2 verbunden sind. Diese Wandler 2 sind mit Teilnehmerleitung-Schnittstellenschaltungen 20 ausgangsseitig verbunden, an denen die Teilnehmerapparate angeschlossen sind.

Dieser Aufbau ist sehr einfach gestaltet, doch ergibt sich bei dieser der Nachteil, daß relativ aufwendige und teure Bauteile erforderlich sind.

Die Schaltung nach der Fig. 8 unterscheidet sich von jener nach der Fig. 7 dadurch, daß eine Kompressor/Dekompressorschaltung 3 zwischen der Modemschaltung 5 und dem Multiplexer/Demultiplexer 4 geschaltet ist, wobei die Analog/Digitalwandler 2 an dem Multiplexer/Demultiplexer 4 angeschlossen sind.

Bei dieser Ausführungsform ergibt sich eine sehr günstige Lösung, da mit einer geringen Anzahl von Bauteilen das Auslangen gefunden wird. Dabei ist es auch möglich den Multiplexer/Demultiplexer 4 samt den Wandlern 2 und den Schnittstellenschaltungen 20 als integrierter Bauteil auf einem Chip anzuordnen, wie dies in der Fig. 9 angedeutet ist.

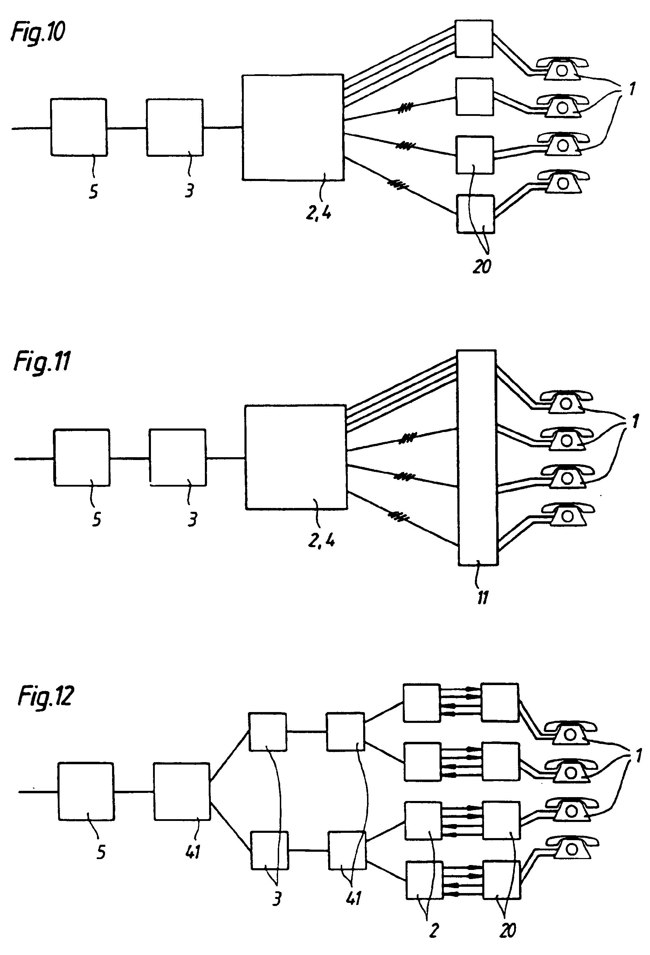

Bei der Ausführungsform nach der Fig. 10, die im wesentlichen jener nach der Fig. 8 entspricht, ist der Multiplexer/Demultiplexer 4 mit den Analog/Digitalwandler 2 integriert.

Bei der Ausführungsform nach der Fig. 11 ist die Modemschaltung 5 mit einer Kompressor/Dekompressorschaltung 3 verbunden, die mit einem Multiplexer/Demultiplexer 4 verbunden ist. Dieser Multiplexer/Demultiplexer 4 ist mit Analog/Digitalwandlern 2 integriert und mit einer Vermittlungseinrichtung 11 verbunden.

Bei der Ausführungsform nach der Fig. 12 ist die Modemschaltung 5 mit einem Zweikanalmultiplexer/Demultiplexer 41 verbunden, der mit zwei Kompressor/Dekompressorschaltungen 3 verbunden ist. Diese letzteren sind mit weiteren Zweikanalmultiplexer/Demultiplexer 41 verbunden, an denen die Analog/Digitalwandler 2 angeschlossen sind, die ihrerseits mit den Schnittstellenschaltungen 20 verbunden sind, an denen die Teilnehmerapparate angeschlossen sind.

Bei dieser Lösung kann eine Komprimierung und Dekomprimierung sehr einfach durchgeführt werden, da sich mathematisch eine 2-Kanal-Komprimierung sehr einfach durchführen läßt, wogegen eine 4-Kanal-Komprimierung nur mit großem Aufwand durchgeführt werden kann.

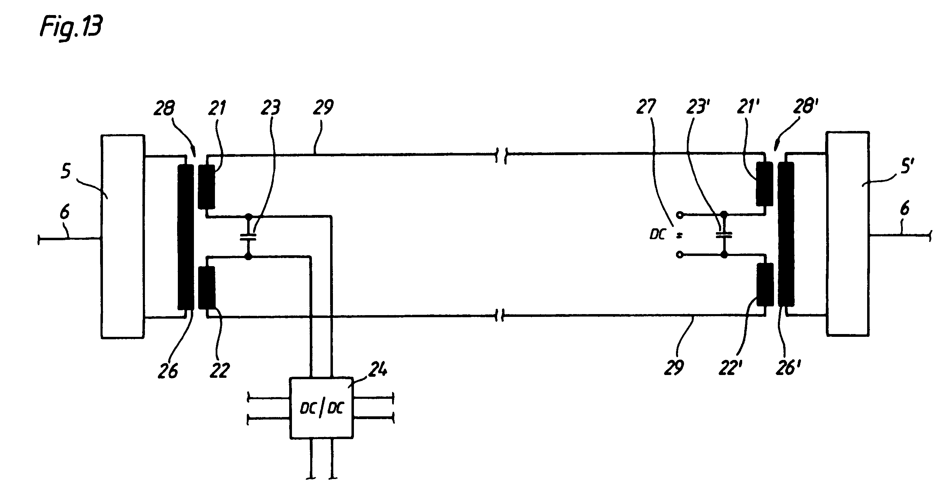

Die Fig. 13 zeigt eine Schaltung zur Spannungsversorgung der Teilnehmerschaltung. Dabei ist an die amtsseitige Modemschaltung 5' ein Übertrager 28' angeschlossen. Dieser weist eine Primärwicklung 26' und zwei Sekundärwicklungen 21', 22' auf, wobei diese beiden Sekundärwicklungen gleich aufgebaut und über einen Kondensator 23' miteinander verbunden sind. Dabei sind die Elektroden des Kondensators 23' mit einer Gleichspannungsquelle 27 verbunden.

An der teilnehmerseitigen Modemschaltung 5 ist ebenfalls ein Übertrager 28 angeschlossen, der gleich wie der Übertrager 28' ausgebildet ist. Allerdings ist an dem Kondensator 23 des Übertragers 28 ein DC/DC-Wandler angeschlossen, an den die verschiedenen Verbraucher der Teilnehmerschaltung angeschlossen sind. Dabei sind die Enden der beiden Sekundärwicklungen 21, 22, bzw. 21', 22' über Verbindungsleitungen 29 miteinander verbunden. Dadurch ist es möglich über diese Verbindungsleitungen nicht nur die Signale sondern auch die zum Betrieb der Teilnehmerschaltung erforderliche Versorgungsspannung zu übertragen. Dadurch kann auf die Anordnung einer Batterie zur Lieferung der Versorgungsspannung beim Teilnehmer verzichtet werden.

## Patentansprüche

1. Nachrichtenübertragungssystem, insbesondere Telefonsystem, bei dem die Teilnehmer (1) über eine Leitung (6) mit einem Wählamt verbindbar sind, wobei die Teilnehmer (1) über folgende Schaltungen mit einer Leitung (6) verbunden sind, die zu einem Wählamt führt:
- jeweils einen bidirektionalen Analog-Digitalwandler (2);
- einen an die Analog-Digitalwandler (2) angeschlossenen bidirektionalen Multiplexer bzw. Demultiplexer (18);
- eine an den Multiplexer bzw. Demultiplexer (18) angeschlossene bidirektionale Kompressor- bzw. Dekompressorschaltung (17); und
- eine an die Kompressor- bzw. Dekompressorschaltung (17) angeschlossene bidirektionale Modemschaltung (5); und
wobei an dem wählamtsseitigen Ende der Leitung (6) zwischen einer Vermittlungseinrichtung (11, 11') des Wählamtes und der Leitung (6) folgende Schaltungen vorgesehen sind:
- eine Mehrzahl von bidirektionalen Analog-Digitalwandlern (2') und/oder Ansteuerschaltungen (13);
- ein bidirektionaler Multiplexer bzw. Demultiplexer, der an den Analog-Digitalwandler (2') bzw. an die Ansteuerschaltungen (13) angeschlossen ist;
- eine bidirektionale Kompressor- bzw. Dekompressorschahung (17'), die an den Multiplexer bzw. Demultiplexer (18') angeschlossen ist; und
- eine bidirektionale Modemschaltung (5'), die an die Kompressor- bzw. Dekompressorschaltung (17') angeschlossen ist,
wobei das Datenformat auf der Leitung (6) dem einer ISDN-Uₖ₀ Schnittstelle entspricht.

2. Nachrichtenübertragungssystem nach Anspruch 1, **dadurch gekennzeichnet**, daß teilnehmerseitig an dem Multiplexer bzw. Demultiplexer (18) neben den zu den Fernsprechapparaten (1) gehörigen Analog-Digitalwandlern (2) als Teilnehmer noch weitere Teilnehmer nämlich Geräte, wie Computer, Telekopierer oder Fernschreiber (8, 9) gegebenenfalls über Modems (10) bzw. weitere bidirektionale Multiplexer bzw. Demultiplexer (15, 16) angeschlossen sind.

3. Nachrichtenübertragungssystem nach einem der Ansprüche 1 oder 2, **dadurch gekennzeichnet**, daß bei Vermittlungseinrichtungen (11) mit analoger Signalsteuerung die den Fernsprechapparaten (1) zugeordneten Ansteuerschaltungen (2') durch bidirektionale Analog-Digitalwandler und die den Geräten zugeordneten Ansteuerschaltungen (12) durch Modems gebildet sind.

4. Nachrichtenübertragungssystem nach einem der Ansprüche 1 oder 2, **dadurch gekennzeichnet**, daß bei Vermittlungseinrichtungen (11') mit digitaler Signalsteuerung die Ansteuerschaltungen (13) durch Teilnehmerschaltungen mit digitalen Signalausgängen gebildet sind.

5. Nachrichtenübertragungssystem nach einem der Ansprüche 1 bis 3, **dadurch gekennzeichnet**, daß parallel zu der amtsseitigen und der teilnehmerseitigen Modemschaltung (5, 5') je ein Übertrager (20, 20') parallel geschaltet sind, bei denen symmetrisch ausgebildete Sekundärwicklungen (21, 22; 21', 22') eines jeden Übertragers (20, 20') über je einen Kondensator (23, 23') miteinander verbunden sind, wobei an den Elektroden des an den amtsseitigen Übertragers (20') angeschlossenen Kondensators (23') eine Gleichspannungsquelle und an den Kondensator (23) des teilnehmerseitigen Übertragers (20) ein DC/DC-Wandler (24) angeschlossen ist und die beiden Enden der Sekundärwicklungen (21, 22; 21', 22') der beiden Übertrager (20, 20') über Übertragungsleitungen miteinander verbunden sind.

## Claims

1. A communications transmission system, in particular a telephone system, in which subscribers (1) can be connected to an automatic exchange via a line (6), with the subscribers (1) being connected via the following circuits with a line (6) leading to an automatic exchange:
- a bidirectional analog-to-digital converter (2);
- a bidirectional multiplexer or demultiplexer (18) connected to the analog-to-digital converters (2);
- a bidirectional compressor or decompressor circuit (17) connected to the multiplexer or demultiplexer (18), and
- a bidirectional modem circuit (5) connected to the compressor or decompressor circuit (17), and
with the following circuits being provided at the automatic exchange end of the line (6) between a switching device (11, 11') of the automatic exchange and the line (6):
- a plurality of bidirectional analog-to-digital converters (2') and/or drive circuits (13);
- a bidirectional multiplexer or demultiplexer which is connected to the analog-to-digital converter (2') or to the drive circuits (13);
- a bidirectional compressor or decompressor circuit (17') which is connected to the multiplexer or demultiplexer (18'), and
- a bidirectional modem circuit (5') which is connected to the compressor or decompressor circuit (17'),
with the data format on the line (6) corresponding to that of an ISDN-Uₖ₀ interface.

2. A communications transmission system as claimed in claim 1, characterized in that at the subscriber end further subscribers, namely devices such as computers, facscimile communications units or teletypewriters (8, 9), are connected as subscribers, optionally via modems (10) or further bidirectional multiplexers or demultiplexers (15, 16), to the multiplexer or demultiplexer (18) in addition to the analog-to-digital converters (2) belonging to the telephone sets (1) as subscribers.

3. A communications transmission system according to claim 1 or 2, characterized in that, in the case of switching devices (11) having analog signal drive, the drive circuits (2') assigned to the telephone sets (1) are formed by bidirectional analog-to-digital converters, and the drive circuits (12) assigned to the devices are formed by modems.

4. A communications transmission system according to claim 1 or 2, characterized in that, in the case of switching devices (11') having digital signal drive, the drive circuits (13) are formed by subscriber line circuits having digital signal outputs.

5. A communications transmission system according to one of the claims 1 to 3, characterized in that connected in parallel with the modem circuit (5, 5') at the automatic exchange end and the subscriber end are in each case one transformer (20, 20') in which symmetrically constructed secondary windings (21, 22; 21', 22') of each transformer (20, 20') are connected to one another via one capacitor (23, 23') each, a direct-current source being connected to the electrodes of the capacitor (23') connected to the transformer (20') at the automatic exchange end, and a DC/DC converter (24) being connected to the capacitor (23) of the transformer (20) at the subscriber end, and the two ends of the secondary windings (21, 22; 21', 22') of the two transformers (20, 20') being connected to one another via transmission lines.

## Revendications

1. Système de transmission d'informations, en particulier système téléphonique, dans lequel des abonnés (1) peuvent être reliés par une ligne (6) à un centre de commutation, les abonnés (1) étant reliés à une ligne (6) aboutissant au centre de commutation par les circuits suivants :
- un convertisseur analogique-numérique bidirectionnel (2) dans chaque direction,
- un multiplexeur ou démultiplexeur bidirectionnel (18) relié aux convertisseurs analogique-numérique (2) ;
- un compresseur ou décompresseur bidirectionnel (17) relié au multiplexeur ou démultiplexeur (18) et
- un modem bidirectionnel (5) relié au compresseur ou décompresseur (17),
dans lequel les circuits suivants sont prévus dans la ligne (6) à son extrémité côté centre de commutation, entre un commutateur (11, 11') du centre de commutation et la ligne (6) :
- une pluralité de convertisseurs analogique-numérique bidirectionnels (2') et/ou de circuits de sélection (13) ;
- un multiplexeur ou démultiplexeur bidirectionnel relié au convertisseur analogique-numérique (2') ou au circuit de sélection (13) ;
- un compresseur ou décompresseur bidirectionnel (17') relié au multiplexeur ou démultiplexeur (18') et
- un modem bidirectionnel (5') relié compresseur ou décompresseur (17'),
le format des données sur la ligne (6) correspondant à celui d'une interface RNIS-Uₖ₀.

2. Système de transmission d'informations selon la revendication 1, caractérisé par le fait que du côté abonnés, d'autres abonnés sont connectés au multiplexeur ou au démultiplexeur (18) outre les convertisseurs analogique-numérique (2) associés aux appareils téléphoniques (1), à savoir des appareils tels qu'ordinateurs, télécopieurs ou téléimprimeurs (8, 9), éventuellement par l'intermédiaire de modems (10) ou d'autres multiplexeurs ou démultiplexeurs bidirectionnels (15, 16).

3. Système de transmission d'informations selon l'une des revendications 1 et 2, caractérisé par le fait que dans le cas de commutateurs (11) à sélection de signaux analogique, les circuits de sélection (2') associés aux appareils téléphoniques (1) sont des convertisseurs analogique-numérique bidirectionnels et les circuits de sélection (12) associés aux appareils sont des modems.

4. Système de transmission d'informations selon l'une des revendications 1 et 2, caractérisé par le fait que dans le cas de commutateurs (11') à sélection de signaux numérique, les circuits de sélection sont des circuits d'abonnés à sorties de signaux numériques.

5. Système de transmission d'informations selon l'une des revendications 1 à 3, caractérisé par le fait qu'en parallèle sur le modem côté centre de commutation et sur le modem côté abonnés (5, 5') est monté un transformateur d'adaptation (20, 20'), les deux transformateur d'adaptation étant montés en parallèle et ayant chacun des enroulements secondaires symétriques (21, 22; 21', 22') reliés par un condensateur (23, 23'), aux électrodes du condensateur (23') relié au transformateur d'adaptation côté centre de commutation (20') étant reliée une source de courant continu et au condensateur (23) du transformateur d'adaptation côté abonnés (20) étant relié un convertisseur continu-continu (24), et les deux bornes des enroulements secondaires (21, 22; 21', 22') des deux transformateurs d'adaptation étant reliées entre elles par des lignes de transmission.
